(19) Europäisches Patentamt
European Patent Office
Office européen des brevets

(11) Veröffentlichungsnummer: 0 087 758
A2

# (12) EUROPÄISCHE PATENTANMELDUNG

(21) Anmeldenummer: 83101786.8

(22) Anmeldetag: 23.02.83

(51) Int. Cl.³: H 04 L 9/00

(30) Priorität: 26.02.82 DE 3207040

(43) Veröffentlichungstag der Anmeldung: 07.09.83 Patentblatt 83/36

(84) Benannte Vertragsstaaten: CH LI NL

(71) Anmelder: SIEMENS AKTIENGESELLSCHAFT
Berlin und München Wittelsbacherplatz 2
D-8000 München 2(DE)

(72) Erfinder: Markwitz, Wernhard, Dr., Dipl.-Ing.
Thalkirchner Strasse 107
D-8000 München 70(DE)

(72) Erfinder: Käser, Eduard, Dipl.-Ing.
Anzengruber Strasse 7
D-8037 Olching(DE)

## (54) Verfahren und Anordnung zum Übertragen von Zeichen.

(57) Um zu verhindern, daß beim Verschlüsseln von Zeichen Bitkombinationen entstehen, die bestimmten Steuerzeichen zugeordnet sind, werden aus den verschlüsselten Zeichen (ZU) übertragbare Zeichen (ZU) erzeugt, die aus einem Teil der verschlüsselten Zeichen (ZS) und Füllzeichen (X) bestehen. Wenn die verschlüsselten Zeichen (ZS) jeweils aus m Binärzeichen bestehen, werden aus einer Folge von verschlüsselten Zeichen (ZS) jeweils n Binärzeichen mit (m-n) Füllzeichen (X) versehen und zu den übertragbaren Zeichen (ZU) zusammengefaßt. Die Binärwerte der Füllzeichen (X) werden so gewählt, daß innerhalb der übertragbaren Zeichen (ZU) und bei bestimmten Folgen von übertragbaren Zeichen (ZU) keine unerwünschten Steuerzeichen auftreten.

FIG 2

ZS4
ZS3
ZS2
ZS1
ZS
5 4 3 2 1 5 4 3 2 1 5 4 3 2 1 5 4 3 2 1
ZU
X 5 4 3 2 X 1 5 4 3 X 2 1 5 4 X 3 2 1 5 X 4 3 2 1
ZS
5 4 3 2 1 5 4 3 2 1 5 4 3 2 1 5 4 3 2 1
ZS4
ZS3
ZS2
ZS1

EP 0 087 758 A2

0087758

SIEMENS AKTIENGESELLSCHAFT
Berlin und München

Unser Zeichen
VPA 82 P 1136 E

# Verfahren und Anordnung zum Übertragen von Zeichen

Die Erfindung bezieht sich auf ein Verfahren und eine Anordnung zum Übertragen von Zeichen gemäß dem Oberbegriff des Patentanspruches 1.

Wenn Zeichen, die entsprechend einem international vereinbarten Code codiert sind, in einer sendenden Station verschlüsselt, zu einer empfangenden Station übertragen und dort entschlüsselt werden, können als verschlüsselte Zeichen Binärkombinationen auftreten, die entsprechend dem Code der unverschlüsselten Zeichen Steuerzeichen bedeuten. Diese Steuerzeichen sind beispielsweise die Zeichen für "Wagenrücklauf", "neue Zeile", "Buchstaben", "Ziffern", "Zwischenraum" oder das Zeichen, das ausschließlich die Binärzeichen Null enthält. Wenn die verschlüsselten Zeichen übertragen und in der empfangenden Station entschlüsselt werden, dann wirken sich die zufällig auftretenden Steuerzeichen nicht störend aus, weil im Zuge der Entschlüsselung anstelle der zufällig aufgetretenen Steuerzeichen wieder die ursprünglich vorhandenen Zeichen auftreten. In manchen Fällen ist es jedoch erwünscht, die verschlüsselten Zeichen aufzuzeichnen, beispielsweise mit Hilfe eines Druckers auszugeben. Dies ist jedoch nicht möglich, weil dieser auf die zufällig auftretenden Steuerzeichen anspricht. Wenn beispielsweise ein verschlüsseltes Zeichen auftritt, das dem Steuerzeichen "Wagenrücklauf" entspricht, dann erkennt der Drucker dieses Steuerzeichen, und der ausgelöste Wagenrücklauf wird an einer im allgemeinen völlig unpassenden Textstelle vorgenommen.

Ret 1 Obh / 24.2.1982

Bei manchen Prozeduren für die Übertragung der Zeichen gelten vereinbarte Folgen von alphanumerischen Zeichen ebenfalls als Steuerzeichen. Dies ist insbesondere dann der Fall, wenn über eine Übertragungsstrecke entweder die Zeichen unverschlüsselt oder verschlüsselt übertragen werden, und als Steuerzeichen werden dann Folgen von Zeichen übertragen, deren Auftreten in einem normalen Text äußerst unwahrscheinlich ist. Derartige Steuerzeichen werden beispielsweise durch vier aufeinanderfolgende Buchstaben M oder S gebildet. Das Auftreten derartiger Steuerzeichen in einem verschlüsselten Text ist ebenfalls unerwünscht, da beispielsweise eine in der Übertragungsstrecke angeordnete Vermittlungsstelle die Verbindung vorzeitig trennt oder andere unerwünschte Steuervorgänge auslöst.

Aus der DE-PS 25 53 897 ist es bekannt, nur die alphanumerischen Zeichen zu verschlüsseln und die Steuerzeichen unverschlüsselt zur empfangenden Station zu übertragen. Das Auftreten von einzelnen verschlüsselten Zeichen, deren Bitkombinationen ein Steuerzeichen darstellen, wird dabei zweckmäßigerweise durch eine entsprechende Verminderung des Vorrats an verschlüsselten Zeichen verhindert. Auf diese Weise wird sichergestellt, daß in dem eingangs genannten Betriebsfall, bei dem in der empfangenden Station der verschlüsselte Text abgedruckt wird, der verschlüsselte Text entsprechend dem eingegebenen Text dargestellt wird. Das Auftreten der letztgenannten Steuerzeichen, die aus mehreren Buchstaben bestehen, innerhalb der verschlüsselten Zeichen kann mit diesem bekannten Verfahren jedoch nicht verhindert werden.

Der Erfindung liegt daher die Aufgabe zugrunde, ein Verfahren und eine Anordnung anzugeben, unter deren Verwendung die Bildung von Steuerzeichen durch die verschlüsselten Zeichen verhindert wird.

Erfindungsgemäß wird die Aufgabe bei dem Verfahren der eingangs genannten Art durch die im kennzeichnenden Teil des Patentanspruchs 1 angegebenen Merkmale gelöst.

Das Verfahren gemäß der Erfindung hat den Vorteil, daß es mit großer Sicherheit arbeitet, da verhindert wird, daß verschlüsselte Zeichen als Steuerzeichen interpretiert werden und auf der Empfangsseite nicht in Form von alphanumerischen Zeichen ausgegeben werden. Eine weitere Verbesserung der Übertragungssicherheit wird dadurch erreicht, daß die Füllzeichen für eine Fehlersicherung verwendet werden.

Das Verfahren wird in vorteilhafter Weise verwendet bei einer Übertragung von Zeichen, die das Format von Fernschreibzeichen haben und entsprechend dem internationalen Telegrafenalphabet Nummer 2 durch fünf informationstragende Binärzeichen codiert sind. In diesem Fall werden jeweils vier Binärzeichen mit einem binären Füllzeichen versehen, und als übertragbares Zeichen von der sendenden Station zur empfangenden Station übertragen. Falls die Zeichen durch jeweils acht Binärzeichen codiert sind, können in entsprechender Weise jeweils sieben Binärzeichen mit einem Füllzeichen versehen werden und anschließend als zu übertragendes Zeichen angegeben werden. Es besteht auch die Möglichkeit, in diesem Fall jeweils vier Binärzeichen mit einem Füllzeichen zu versehen, und die auf diese Weise erzeugten Zeichen über eine Übertragungsstrecke zu übertragen, die für die Übertragung von Fernschreibzeichen mit jeweils fünf Binärzeichen vorgesehen ist.

Die Festlegung der Binärwerte der Füllzeichen kann dadurch erfolgen, daß abwechselnd das Füllzeichen den Binärwert Null oder Eins annimmt und/oder daß beim Auftreten von Steuerzeichen, die aus einem Zeichen gebildet werden, eines der Binärzeichen als Füllzeichen invertiert wird. Zweckmäßigerweise wird bei einer Übertragung der verschlüsselten Zeichen in Form von Fernschreibzeichen das erste oder das letzte Binärzeichen als Füllzeichen verwendet.

Eine vorteilhafte Ausgestaltung einer Anordnung zur Durchführung des Verfahrens ist dadurch gekennzeichnet, daß in der sendenden Station dem die Zeichen verschlüsselnden Schlüsselrechner ein erster Umsetzer nachgeschaltet ist, der die verschlüsselten Zeichen in die übertragbaren Zeichen umsetzt, und daß in der empfangenden Station dem die verschlüsselten Zeichen entschlüsselten Schlüsselrechner ein zweiter Umsetzer vorgeschaltet ist, der die übertragbaren Zeichen wieder in die verschlüsselten Zeichen umsetzt. Die Umsetzung kann dadurch erfolgen, daß jeweils eine vorgegebene Anzahl von verschlüsselten bzw. übertragbaren Zeichen in einem Schieberegister gespeichert werden und unter Verwendung eines Multiplexers und der Hinzufügung bzw. Entfernung der Füllzeichen über ein weiteres Schieberegister ausgegeben werden. Es ist selbstverständlich auch möglich, die Umsetzung unter Verwendung eines Mikrorechners durchzuführen.

Das Verfahren gemäß der Erfindung und eine Anordnung zur Durchführung des Verfahrens werden im folgenden anhand von Zeichnungen näher erläutert. Es zeigen

Fig. 1 eine schematische Darstellung einer Anordnung zur Verschlüsselung, Übertragung und Entschlüsselung von Zeichen,

Fig. 2 eine schematische Darstellung einer Umsetzung und Rückgewinnung von verschlüsselten Zeichen,

Fig. 3 ein Blockschaltbild einer Anordnung zur Umsetzung der verschlüsselten Zeichen in übertragbare Zeichen,

Fig. 4 ein Blockschaltbild einer Anordnung zur Rückgewinnung der verschlüsselten Zeichen aus den übertragbaren Zeichen.

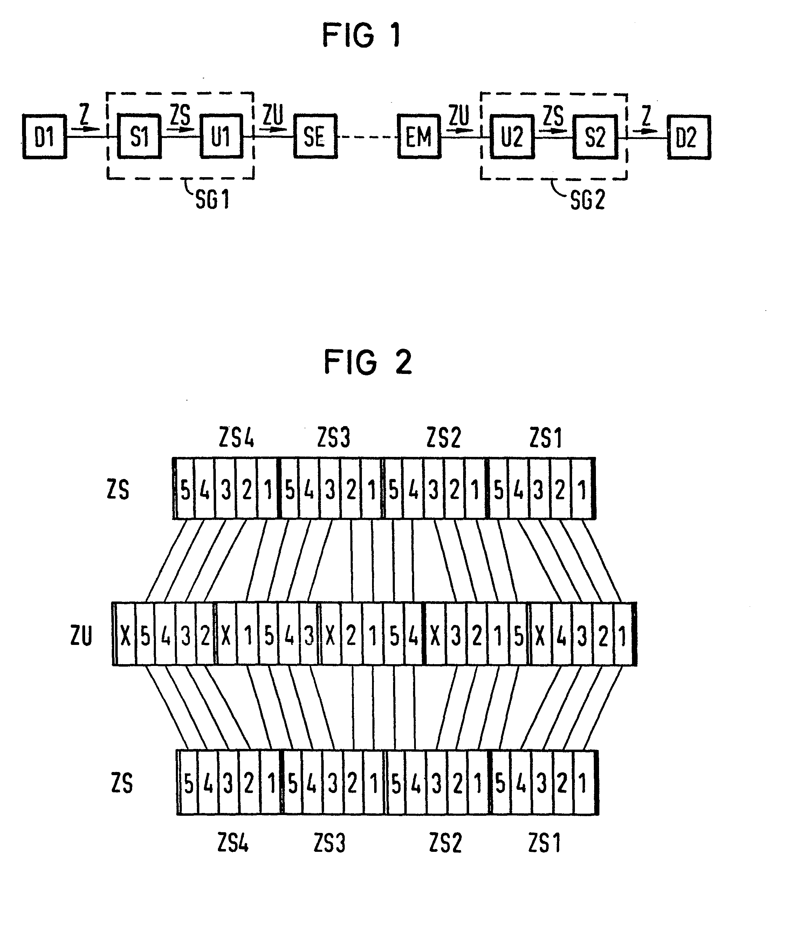

Die Fig. 1 zeigt sendeseitig eine Datenquelle D1, ein Schlüsselgerät SG1 und einen Datensender SE und empfangsseitig einen Datenempfänger EM, ein zweites Schlüsselgerät SG2 und eine Datensenke D2. Das Schlüsselgerät SG1 enthält einen Schlüsselgenerator S1, der die von der Datenquelle D1 abgegebenen Zeichen Z verschlüsselt und verschlüsselte Zeichen ZS abgibt. Die verschlüsselten Zeichen ZS werden einem Umsetzer U1 zugeführt, der das Auftreten von Steuerzeichen innerhalb der verschlüsselten Zeichen verhindert und übertragbare Zeichen ZU an den Datensender SW abgibt. Nach der Übertragung der übertragbaren Zeichen ZU gelangen diese zum Datenempfänger EM, der sie an das Schlüsselgerät SG2 abgibt. Dieses enthält einen Umsetzer U2, der aus den übertragbaren Zeichen ZU wieder die verschlüsselten Zeichen ZS zurückgewinnt. Ein Schlüsselrechner S2 erzeugt aus den verschlüsselten Zeichen ZS wieder die ursprünglichen Zeichen Z und führt sie der Datensenke D2 zu.

In Fig. 2 sind die Umsetzvorgänge in den beiden Umsetzern U1 und U2 schematisch dargestellt. Es wird davon ausgegangen, daß die Zeichen Z und die verschlüsselten Zeichen ZS entsprechend dem internationalen Fernschreibcode Nummer 2 codiert sind und jeweils fünf informationstragende Binärzeichen aufweisen. Gegebenenfalls vorhandene Start- und Stopzeichen werden hier nicht betrachtet, da sie für den Umsetzvorgang ohne Bedeutung sind. Bei der Umsetzung werden jeweils vier Binärzeichen der verschlüsselten Zeichen ZS mit einem Füllzeichen X versehen und zu einem neuen, übertragbaren Zeichen ZU zusammengefaßt, das mit einem Start- und einem Stopschritt versehen werden kann und von der sendenden Station zur empfangenden Station übertragen werden kann.

Das Füllzeichen X wird vorzugsweise anstelle des ersten oder fünften Binärzeichens im Fernschreibzeichen angeordnet. Die Binärwerte der Füllzeichen X werden, wenn die Codierung der verschlüsselten Zeichen ZS alphanumerischen Zeichen entspricht, von Zeichen zu Zeichen geändert und nehmen somit wechselweise die Binärwerte Null oder Eins an. Auf diese Weise wird verhindert, daß Steuerzeichen entstehen, die aus mehreren gleichen alphanumerischen Zeichen gebildet werden.

Wenn die Codierung eines auf diese Weise erzeugten übertragbaren Zeichens ZU für sich bereits einem Steuerzeichen entsprechen würde, wird der Binärwert des Füllzeichens X invertiert.

Durch die Einführung der Füllzeichen X sind bei dem dargestellten Beispiel bei einer Nachricht zwar 25% mehr Zeichen zu übertragen, jedoch besteht eine große Sicherheit gegen Fehlsteuerungen auf den Übertragungsstrecken bei der Verwendung von vereinbarten Prozeduren und bei der Aufzeichnung der verschlüsselten Zeichen, beispielsweise an einem Drucker. Außerdem können die Füllzeichen X zur Fehlersicherung verwendet werden.

Auf der Empfangsseite werden aus den ankommenden übertragbaren Zeichen ZU die Füllzeichen X wieder entfernt und von den restlichen Binärzeichen werden wieder jeweils fünf zu einem Zeichen zusammengefaßt, das dann wieder das verschlüsselte Zeichen ZS darstellt und dem Schlüsselrechner S2 zugeführt wird.

In ganz entsprechender Weise können bei einer Codierung der verschlüsselten Zeichen ZS mit acht Binärzeichen jeweils sieben oder weniger Zeichen zusammengefaßt werden, mit ein oder mehreren Füllzeichen X versehen werden, und als übertragbare Zeichen ZU mit wieder acht Binärzeichen ausgegeben werden. Es ist auch möglich, verschlüsselte Zeichen ZS mit jeweils acht Binärzeichen in zwei oder mehr Fernschreibzeichen mit jeweils fünf Binärzeichen aufzuteilen, wenn beispielsweise jeweils vier Binärzeichen mit einem Füllzeichen X versehen werden und als Fernschreibzeichen ausgegeben werden.

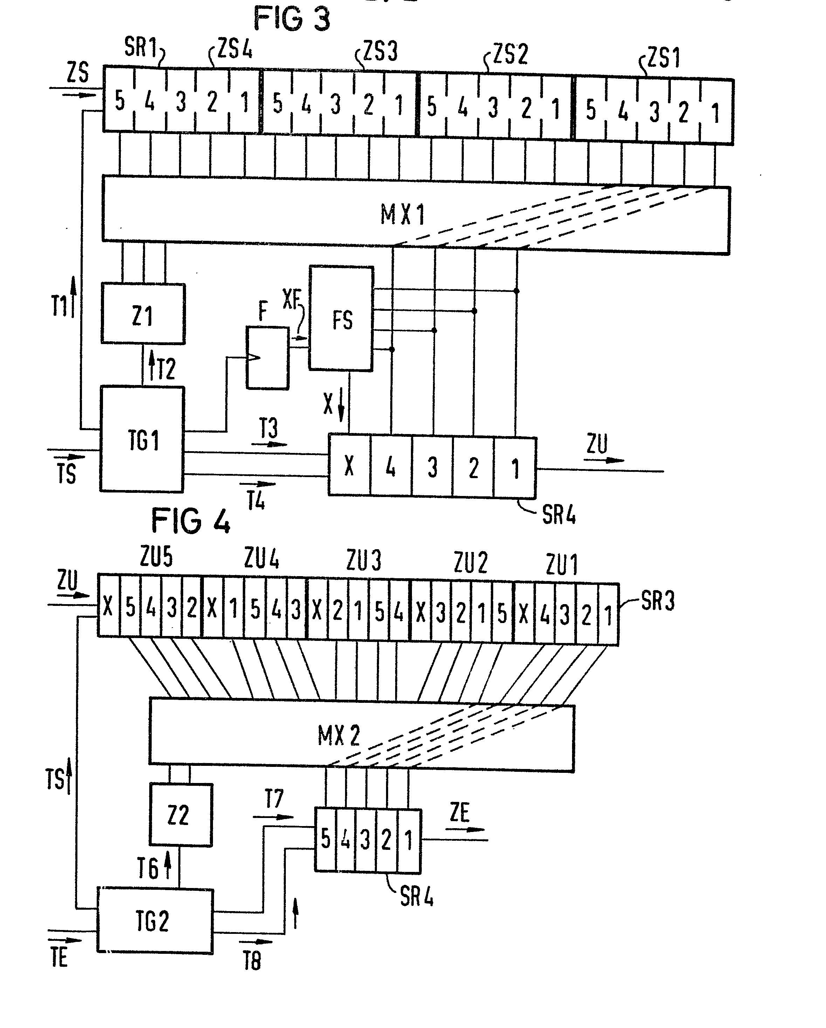

Bei dem in Fig. 3 dargestellten Blockschaltbild des Umsetzers U1 ist ein erstes Schieberegister SR1 vorgesehen, dem vom Schlüsselrechner S1 jeweils vier verschlüsselte Zeichen ZS zugeführt werden. Ein Taktgeber TG1 liefert, beispielsweise nach Auslösung durch ein jeweils einem verschlüsselten Zeichen ZS zugeordneten, vom Schlüsselrechner S1 abgegebenen Taktsignal TS Taktimpulse T1, die die verschlüsselten Zeichen ZS in das Schieberegister SR1 seriell einspeichern. An den parallelen Ausgängen des Schieberegisters SR1 ist ein Multiplexer MX1 angeschlossen, der vier Ausgänge aufweist und diese Ausgänge zeitlich nacheinander zu jeweils vier Eingängen umschaltet. Die Umschaltung wird gesteuert durch einen Zähler Z1, der nach dem Auftreten der Taktimpulse T1 vom Taktgeber TG1 Taktimpulse T2 erhält. In der Ausgangsstellung werden die ersten vier Binärzeichen des verschlüsselten Zeichens ZS1 über den Multiplexer MX1 zu einem zweiten Schieberegister SR2 durchgeschaltet.

Ein Festwertspeicher FS überprüft die Binärwerte der Binärzeichen und zusätzlich den Binärwert eines von einem Flip-Flop F abgegebenen Signals XF. Wenn die Kombination dieser Binärzeichen und des vom Flip-Flop F abgegebenen Signals XF einem einzelnen Steuerzeichen entspricht, gibt der Festwertspeicher FS ein Füllzeichen X an das Schieberegister SR2 ab, das dem invertierten Signal XF entspricht. In allen übrigen Fällen wird das Signal XF als Füllzeichen X zum Schieberegister SR2 durchgeschaltet. Anschließend erzeugt der Taktgeber TG1 einen Taktimpuls T3, der die anliegenden Binärwerte der Binärzeichen und des Füllzeichens X in das Schieberegister SR2 übernimmt. Danach erzeugt der Taktgeber TG1 Taktimpulse T4, die das Schieberegister SR2 seriell auslesen und das erste übertragbare Zeichen ZU am Ausgang des Schieberegisters SR2 abgeben..

Anschließend wird wieder ein Taktimpuls T2 erzeugt und der Multiplexer MX1 schaltet die nächsten vier Binärzeichen, d.h. das fünfte Binärzeichen des verschlüsselten Zeichens ZS1 und die ersten drei Binärzeichen des verschlüsselten Zeichens ZS2 zum Schieberegister SR2 durch. Wieder erzeugt der Festwertspeicher FS ein entsprechendes Füllzeichen X und anschließend wird das nächste übertragbare Zeichen ZU abgegeben. Dieser Vorgang wiederholt sich solange, bis alle Binärzeichen im Schieberegister SR1 verarbeitet wurden. Anschließend werden die nächsten vier verschlüsselten Zeichen ZS in das Schieberegister SR1 eingelesen und der gesamte Vorgang wiederholt sich von neuem.

Bei dem in Fig. 4 dargestellten Blockschaltbild des Umsetzers U2 in der empfangenden Station gelangen die übertragbaren Zeichen ZU vom Datenempfänger EM zu einem ersten Schieberegister SR3. Dieses nimmt jeweils fünf Zeichen ZU1 bis ZU5 auf. Die Einspeicherung erfolgt dadurch, daß ein Taktgeber TG2 vom Datenempfänger EM bei jedem Zeichen ZU ein Taktsignal TE erhält, und dann Taktimpulse T5 erzeugt, mit denen die Zeichen ZU in das Schieberegister SR3 eingespeichert werden. Diejenigen Stufen des Schieberegisters SR3, die Binärzeichen enthalten, also nicht diejenigen Stufen, die ein Füllzeichen X enthalten, sind mit den Eingängen eines Multiplexers MX2 verbunden. Dieser Multiplexer MX2 weist fünf Ausgänge auf, und er schaltet diese Ausgänge jeweils auf fünf Eingängen um. Auch diese Umschaltung erfolgt unter Verwendung eines Zählers Z2, der durch Taktimpulse T6 angesteuert wird.

In seiner Ausgangsstellung schaltet der Multiplexer MX2 die ersten vier Binärzeichen des Zeichens ZU1 und das erste Binärzeichen des Zeichens ZU2 zu seinem Ausgang durch. Wenn der Taktgeber TG2 einen Taktimpuls T7 erzeugt, werden diese Binärzeichen parallel in ein zweites Schieberegister SR4 eingespeichert. Die Binärzeichen, die nunmehr im Schieberegister SR4 gespeichert sind, entsprechend den Binärzeichen des verschlüsselten Zeichens ZS1. Anschliessend erzeugt der Taktgeber TG2 Taktimpulse T8, mit denen das Schieberegister SR4 seriell ausgelesen wird, so daß an seinem Ausgang das verschlüsselte Zeichen ZS1 abgegeben wird. Anschließend wird wieder ein Taktimpuls T6 erzeugt und der Multiplexer MX2 verbindet die nächsten fünf Eingänge mit seinen Ausgängen, so daß das verschlüsselte Zeichen ZS2 in das Schieberegister SR4 übernommen und anschließend ausgegeben wird. Dieser Vorgang wiederholt sich solange, bis alle Binärzeichen der Zeichen ZU1 bis ZU5 verarbeitet wurden. Danach werden die nächsten Zeichen ZU in das Schieberegister SR3 eingelesen und der Gesamtvorgang wiederholt sich erneut.

Da bei der Umsetzung im Umsetzer U1 aus jeweils vier verschlüsselten Zeichen ZS fünf übertragbare Zeichen ZU erzeugt werden, ist in der sendenden Station ein Pufferspeicher erforderlich. Außerdem ist es zweckmäßig, die Eingabe der Zeichen Z gegebenenfalls zu sperren, wenn noch nicht genügend zuvor eingegebene Zeichen Z verarbeitet wurden. In entsprechender Weise ist auch in der empfangenden Station ein Pufferspeicher erforderlich, da bei dem dargestellten Ausführungsbeispiel jeweils fünf Zeichen ZU1 bis ZU5 zusammengefaßt werden, bevor die Umsetzung in die verschlüsselten Zeichen ZS erfolgt. Die Umsetzer U1 und U2 können selbstverständlich auch als Mikrorechner ausgebildet sein, die die Umsetzung programmgesteuert durchführen.

10 Patentansprüche

4 Figuren

Patentansprüche

1. Verfahren zum Übertragen von Zeichen von einer sendenden Station zu einer empfangenden Station, bei dem in der sendenden Station die von einer Datenquelle abgegebenen Zeichen verschlüsselt werden, bei dem in der empfangenden Station die verschlüsselten Zeichen entschlüsselt werden und an einer Datensenke ausgegeben werden, und bei dem die verschlüsselten Zeichen eine erste Anzahl m von Binärzeichen aufweisen, dadurch gekennzeichnet, daß in der sendenden Station jeweils eine zweite Anzahl n von Binärzeichen von aufeinanderfolgenden verschlüsselten Zeichen (ZS), wobei n kleiner als m ist, mit einer vorgegebenen Anzahl von binären Füllzeichen (X) versehen wird, zu jeweils einem übertragbaren Zeichen (ZU) zusammengefaßt wird, und zur empfangenden Station übertragen wird, und daß in der empfangenden Station aus den übertragbaren Zeichen (ZU) die Füllzeichen (X) entfernt werden und von den verbleibenden Binärzeichen der übertragbaren Zeichen (ZU) jeweils die erste Anzahl m von Binärzeichen zu einem dem ursprünglichen verschlüsselten Zeichen (ZS) zugeordneten Zeichen zusammengefaßt wird und entschlüsselt wird.

2. Verfahren nach Anspruch 1, dadurch gekennzeichnet, daß die verschlüsselten Zeichen (ZS) jeweils eine erste Anzahl m von fünf Binärzeichen aufweisen, und daß jeweils eine zweite Anzahl n von vier Binärzeichen mit einem Füllzeichen (X) versehen und jeweils zu einem übertragbaren Zeichen (ZU) zusammengefaßt wird.

3. Verfahren nach Anspruch 1, dadurch gekennzeichnet, daß die verschlüsselten Zeichen (ZS) jeweils eine erste Anzahl m von acht Binärzeichen aufweisen, und daß jeweils eine zweite Anzahl n von vier Binärzeichen mit einem Füllzeichen (X) versehen wird.

4. Verfahren nach einem der Ansprüche 1 bis 3, dadurch gekennzeichnet, daß die übertragbaren Zeichen (ZU) entsprechend den Fernschreibzeichen mit Start- und Stopschritten versehen werden.

5. Verfahren nach Anspruch 1, dadurch gekennzeichnet, daß die verschlüsselten Zeichen (ZS) jeweils eine erste Anzahl m von acht Binärzeichen aufweisen, und daß jeweils eine zweite Anzahl n von sieben Binärzeichen mit einem Füllzeichen (X) versehen und zu jeweils einem übertragbaren Zeichen (ZU) zusammengefaßt wird.

6. Verfahren nach einem der Ansprüche 1 bis 5, dadurch gekennzeichnet, daß die Binärwerte der Füllzeichen in aufeinanderfolgenden übertragbaren Zeichen (ZU) jeweils abwechselnd den ersten und den zweiten Binärwert aufweisen.

7. Verfahren nach einem der Ansprüche 1 bis 6, dadurch gekennzeichnet, daß beim Auftreten einer Folge von Binärzeichen und Füllzeichen (X), die einem einzelnen Steuerzeichen zugeordnet ist, der Binärwert des Füllzeichens (X) im übertragbaren Zeichen (ZU) invertiert wird.

8. Anordnung zur Durchführung des Verfahrens nach Anspruch 1, bei der in der sendenden Station der Datenquelle ein erstes Schlüsselgerät nachgeschaltet ist, und bei dem in der empfangenden Station der Datensenke ein zweites Schlüsselgerät vorgeschaltet ist, dadurch gekennzeichnet, daß das erste Schlüsselgerät (SG1) einen Umsetzer (U1) enthält, der aus jeweils n aufeinanderfolgenden Binärwerten der verschlüsselten Zeichen (ZS) unter Hinzufügung der Füllzeichen (X) ein übertragbares Zeichen (ZU) erzeugt, und daß in der empfangenden Station das zweite Schlüsselgerät (SG2) einen zweiten Umsetzer (U2) enthält, der aus den übertragbaren Zeichen (ZU) nach einer Abtrennung der Füllzeichen (X) den verschlüsselten Zeichen zugeordneten Zeichen (ZS) mit jeweils m Binärzeichen erzeugt.

9. Anordnung nach Anspruch 8, dadurch gekennzeichnet, daß der erste bzw. der zweite Umsetzer (U1 bzw. U2) jeweils ein erstes Schieberegister (SR1,SR3) enthält, an dessen parallelen Ausgängen der Multiplexer (MX1 bzw. MX2) angeschlossen ist, der zeitlich nacheinander jeweils n bzw. m Binärzeichen an ein zweites Schieberegister (SR2 bzw. SR4) abgibt, und daß der erste Umsetzer (U1) einen Festwertspeicher (FS) enthält, der unter Verwendung der vom Multiplexer (MX1) abgegebenen Binärzeichen und einem mit jedem verschlüsselten Zeichen (ZS) sich ändernden Binärzeichen die Füllzeichen (X) erzeugt und dem zweiten Schieberegister (SR2) zuführt.

10. Anordnung nach Anspruch 8, dadurch gekennzeichnet, daß die Umsetzer (U1,U2) aus jeweils einem Mikrorechner gebildet werden.

FIG 1

D1
Z
S1
ZS
U1
ZU
SE
EM
ZU
U2
ZS
S2
Z
D2
SG1
SG2

FIG 2

ZS4
ZS3
ZS2
ZS1
ZS
5 4 3 2 1 5 4 3 2 1 5 4 3 2 1 5 4 3 2 1
ZU
X 5 4 3 2 X 1 5 4 3 X 2 1 5 4 X 3 2 1 5 X 4 3 2 1
ZS
5 4 3 2 1 5 4 3 2 1 5 4 3 2 1 5 4 3 2 1
ZS4
ZS3
ZS2
ZS1

0087758

FIG 3
SR1
ZS4
ZS3
ZS2
ZS1
ZS
5 4 3 2 1
MX1
T1
Z1
T2
F
XF
FS
X
TG1
TS
T3
T4
X 4 3 2 1
ZU
SR4
FIG 4
ZU5
ZU4
ZU3
ZU2
ZU1
ZU
X 5 4 3 2 X 1 5 4 3 X 2 1 5 4 X 3 2 1 5 X 4 3 2 1
SR3
MX2
TS
Z2
T6
T7
5 4 3 2 1
ZE
SR4
TG2
TE
T8